# EUROPÄISCHE PATENTSCHRIFT

(11) **EP 4 434 647 B1**
(45) Veröffentlichungstag und Bekanntmachung des Hinweises auf die Patenterteilung: **08.07.2026**
(21) Anmeldenummer: 23163499.9
(22) Anmeldetag: 22.03.2023
(51) Int. Cl.: B21B 45/02

(54) **ABQUETSCHROLLE MIT INNENLIEGENDEM ANTRIEB FÜR EINE KALTWALZANLAGE**
PINCH ROLL WITH INTERNAL DRIVE FOR A COLD ROLLING MILL
ROULEAU DE PINCEMENT AVEC ENTRAÎNEMENT INTERNE POUR LAMINOIR À FROID

(43) Veröffentlichungstag der Anmeldung: 25.09.2024
(73) Patentinhaber: Primetals Technologies Austria GmbH, 4031 Linz (AT)
(72) Erfinder: Bergmann, Martin, 4020 Linz (AT); Dirisamer, Gernot, 4710 Grieskirchen (AT); Kellermayr, Roland, 4502 St. Marien (AT); Schinagl, Bernhard, 4053 Ansfelden (AT)
(74) Vertreter: Metals@Linz

(56) Entgegenhaltungen:
- WO-A1-2019/034677
- CN-A- 113 118 215
- JP-A- H0 220 611

## Beschreibung

Die Erfindung betrifft eine Vorrichtung und ein Verfahren zum Beseitigen von Kühlschmiermittel beim Walzen eines Walzbandes in einer Kaltwalzanlage mit zumindest einem Walzgerüst.

Eine Kaltwalzanlage zum Walzen von flachen Walzgütern - beispielsweise eine Tandemwalzstraße - umfasst zumindest ein, bevorzugt mehrere Walzgerüste, die von dem flachen Walzgut sukzessive durchlaufen werden. Bei der Kaltwalzanlage kann es sich auch um eine Reversierwalzanlage handeln, die ein oder mehrere Walzgerüste umfasst, die von dem Walzband in abwechselnder Richtung durchlaufen werden.

Bei dem flachen Walzgut handelt es sich in der Regel um ein Walzband aus Stahl. Jedes Walzgerüst der Kaltwalzanlage umfasst zumindest zwei Arbeitswalzen, die gemeinsam einen Walzspalt ausbilden, durch den das Walzband hindurchgeführt wird. Zum Einbringen ('Einfädeln') des Anfangsabschnitts eines Walzbandes (auch als 'Bandkopf' bezeichnet) in das Walzgerüst wird dieses 'geöffnet', d.h. es werden die Arbeitswalzen in dem Walzgerüst so weit auseinandergefahren, dass der Walzspalt größer als die Banddicke des einzufädelnden Walzbandes ist. Nach erfolgtem Einfädeln wird das Walzgerüst wieder 'geschlossen', d.h. der Walzspalt wird so weit verringert, dass die Arbeitswalzen das eingefädelte Band kontaktieren.

Zudem wird hinter dem Walzgerüst am Walzband eine Zugkraft (der sog. 'Bandzug') aufgebaut, sodass das Walzband während des Walzvorgangs entlang einer sogenannten Bandlauflinie durch das Walzgerüst durchläuft. Die Bandlauflinie ist unmittelbar vor und hinter dem Walzspalt eines Walzgerüsts im Wesentlichen horizontal orientiert. Beim Walzen in dem Walzgerüst wird die Dicke des Walzbandes durch die Einwirkung der Arbeitswalzen auf eine vorgegebene Auslaufdicke hinter dem betreffenden Walzgerüst reduziert, wobei diese Auslaufdicke der Einlaufdicke eines gegebenenfalls nachfolgend angeordneten Walzgerüsts der Kaltwalzanlage entspricht. Der Bereich zwischen zwei hintereinander angeordneten Walzgerüsten wird auch als Zwischengerüstbereich bezeichnet.

Ferner wird beim Durchlauf des Walzbandes durch ein Walzgerüst in der Regel ein Kühlschmiermittel auf die Arbeitswalzen des Walzgerüsts und/oder auf das Walzband aufgebracht, um den Prozess der Dickenreduktion des Walzbandes zu unterstützen und die dabei entstehende Umformungswärme abzuleiten. Bei dem Kühlschmiermittel handelt es sich in der Regel um eine Schmieremulsion, beispielsweise um Wasser mit einem Anteil von bis zu 5% reinem Schmierstoff; alternativ kann jedoch auch reines Schmiermittel, beispielsweise reines Walzöl, eingesetzt werden. Unterhalb der Arbeitswalzen ist in der Regel eine Auffangeinrichtung für das aufgebrachte Kühlschmiermittel angeordnet, welches in der Folge gesammelt und wiederaufbereitet wird.

In Kaltwalzanlagen werden sogenannte Abquetschrollen jeweils unmittelbar hinter einem Walzgerüst eingesetzt, wobei eine Abquetschrolle mit Hilfe eines zugeordneten Anstellmechanismus an die Oberseite des Walzbandes angestellt wird und dieses während des Walzvorganges in eine bestimmte Bandlauflinie durch das Walzgerüst lenkt bzw. umlenkt. Dadurch wird das beim Walzen eingesetzte Kühlschmiermittel, das sich auf der Oberseite des Walzbandes ansammelt, zurückgehalten und eine Ausbreitung in den Zwischengerüstbereich bzw. ein Eintrag in das nachfolgende Walzgerüst verhindert. Dies ist erforderlich, da sich im Zwischengerüstbereich Messgeräte befinden können, die ohne das Beseitigen des Kühlschmiermittels gestört würden oder weil eine visuelle Kontrolle des Walzbandes ermöglicht werden soll. Eventuell muss auch eine Trennung von unterschiedlichen Kühl- und Schmiermittelsystemen, die einzelnen Walzgerüsten zugeordnet sind, erfolgen. Dabei kommt bei Anstellung der Abquetschrolle an das Walzband dessen tiefster Punkt in der Regel oberhalb einer Auffangeinrichtung zu liegen, sodass auf dem Walzband befindliches Kühlschmiermittel von der Abquetschrolle in einer Richtung quer zur Bandlauflinie von dem Walzband entfernt und von der Auffangeinrichtung aufgenommen wird.

Abseits der unmittelbaren Umgebung des Walzspaltes eines Walzgerüsts - d.h. im Bereich ab etwa 0.5m vor und hinter dem Walzgerüst im Zwischengerüstbereich - verläuft die Bandlauflinie eines Walzbandes jedoch nicht zwingend geradlinig sondern wird beispielsweise durch Zugmess- oder Planheitsmessrollen beeinflusst. Weiterhin kann die Bandlauflinie in Abhängigkeit von den Eigenschaften des betreffenden Walzbandes bzw. von dessen Produktionsparametern mit Hilfe von weiteren Rollen eingestellt werden. So müssen z.B. Walzbänder einer bestimmten Produktklasse in einem Walzgerüst mit auslaufseitiger Beaufschlagung von Schmiermittel gewalzt werden, was eine Anstellung einer entsprechenden Abquetschrolle erforderlich macht, um einen Schmiermitteleintrag in den nachfolgenden Zwischengerüstbereich zu verhindern. Demgegenüber kann es sein, dass die Produktion von Walzbändern anderer Produktklassen keine bzw. keine nennenswerte Aufbringung von Schmiermittel erfordert und daher eine Abquetschrolle während des Walzens derartiger Bänder nicht an das Walzband angestellt werden muss.

Abquetschrollen sind typischerweise leichtgängig - beispielsweise in Form eines Hohlzylinders mit geringem Trägheitsmoment - ausgeführt und werden durch Reibung von dem Walzband angetrieben, sodass dabei im Idealfall keine Relativbewegung (Schlupf) zwischen der Abquetschrolle und dem antreibenden Walzband auftritt.

In der Praxis tritt bei solchen passiv angetriebenen Abquetschrollen jedoch häufig Schlupf auf, besonders wenn große Emulsionsmengen oder Emulsionen mit hohem Schmiermittelanteil verwendet werden. Speziell können rutschende Abquetschrollen hinter den ersten von einem Walzband durchlaufenen Walzgerüsten unbemerkte Kratzer und Bandbeschädigungen hervorrufen, die durch das Überwalzen in den nachfolgenden Walzgerüsten allenfalls erst in einer der Kaltwalzanlage nachgeordneten Behandlungsanlage entdeckt werden. In solchen Fällen werden große Mengen an Ausschussmaterial produziert, ohne dass dies frühzeitig erkannt und verhindert werden könnte.

Auf der Oberfläche des Walzbandes verbleibendes Kühlschmiermittel reduziert die Reibung zwischen der Abquetschrolle und dem Walzband, wodurch das vom Walzband an die Abquetschrolle übertragene Drehmoment reduziert wird. Dies führt bei manchen Betriebszuständen (abhängig von der Banddicke, dem Bandzug und der Geschwindigkeit des Bandes) dazu, dass Schlupf zwischen der Abquetschrolle und dem Walzband auftritt, was wiederum Beschädigungen der Bandoberfläche in Form von Rutschkratzern hervorrufen kann.

In der Regel verfügen Abquetschrollen weder über einen eigenen Antrieb noch wird ihre Drehbewegung beim Walzen eines Walzbandes überwacht. Die beschriebenen Probleme können daher unter diesen Umständen erst in Form von Qualitätsmängeln des finalen Produktes identifiziert und nicht vorzeitig unterbunden werden, da keine zuverlässigen Detektionsmechanismen bzw. Stellmöglichkeiten zur Verhinderung eines nicht-synchronen Verhaltens zwischen Abquetschrolle und Walzband vorhanden sind.

Durch eine Inspektion der Bandoberfläche in Kombination mit einer Drehzahlüberwachung der Abquetschrolle können zwar jene Betriebszustände, bei denen Schlupf auftritt, identifiziert, jedoch nicht verhindert werden. Eine Verringerung des Trägheitsmoments der Abquetschrolle führt zwar zu einer verbesserten Mitnahme der Abquetschrolle durch das Walzband, jedoch kann Schlupf nicht für alle Betriebszustände, insbesondere nicht bei einem hohen Schmiermittelanteil im Kühlschmiermittel, ausgeschlossen werden. Auch bei einer Modifikation der Oberfläche der Abquetschrolle (beispielsweise durch Erhöhen von deren Rauheit) lässt sich die Abquetschrolle nicht dauerhaft und betriebssicher einsetzen.

Eine weitere Möglichkeit, dem vorgenannten Schlupf entgegenzuwirken, besteht in der Erhöhung des Anpressdrucks, mit dem eine Abquetschrolle an ein Walzband angestellt wird: so sind aus der US 4,323,122 A paarweise an ein Walzband angestellte Rollen zur Entfernung von Schmiermittel von einem Walzband bekannt, wobei die untere der beiden Rollen eine Gegenrolle darstellt, mittels der ein entsprechender Anstelldruck für die obere Abquetschrolle realisiert werden kann. Die Gegenrolle ist zur Anpassung ihrer Oberflächenkontur mit einer unter Druck stehenden Flüssigkeit beaufschlagbar, sodass ein gleichförmiger Anpressdruck entlang der Kontaktlinie der beiden Rollen mit dem Walzband erzielt wird. Nachteilig dabei ist einerseits der erhöhte Konstruktionsaufwand für die untere Gegenrolle, andererseits ist ein eigener Regelvorgang nötig, um die entsprechende Formgebung der Gegenrolle passend zu den jeweiligen Produktionsbedingungen einzustellen.

Alternativ kann auf einem Walzband verbleibendes Kühlschmiermittel auch durch Abblasen entfernt werden: in diesem Zusammenhang ist aus der EP 0 513 632 A1 eine Schlitzstrahldüse bekannt, die mit einem unter Druck stehenden Gas beaufschlagt wird und deren Austrittsöffnung quer zu einer Bandlaufrichtung orientiert ist, wobei die Richtung des abgegebenen Gasstrahls mit einer Neigung von 45° bis 90° gegen die Bandlaufrichtung gerichtet ist und wobei die Austrittsgeschwindigkeit des Gasstrahls in einem Bereich von 0,3 bis 2 Mach liegt. Nachteilig an dieser Lösung ist der große Energiebedarf zur Erzielung eines Gasstrahls mit einer derart hohen Austrittsgeschwindigkeit. Zudem besteht die Gefahr der Verschmutzung der Umgebung der Walzanlage durch das Kühlschmiermittel, wenn dieses einen Flüssigkeitspegel von mehreren Millimetern auf dem Walzband ausbildet und mit einem unter hohem Druck stehenden Gasstrahl abgeblasen wird.

Ein weitere Maßnahme zur Vermeidung von Schlupf zwischen einer Abquetschrolle und dem Walzband kann in einem Antrieb für die Abquetschrolle bestehen, sodass diese nicht oder nicht ausschließlich durch Reibung vom Walzband in Rotation versetzt wird. Dabei wäre jedoch ein außerhalb der Abquetschrolle angeordneter Antrieb wegen Platzmangels in einem Walzgerüst nicht umsetzbar, weil eine Abquetschrolle üblicherweise - entlang ihrer Axialrichtung betrachtet - zwischen den Ständerholmen des Walzgerüsts angeordnet ist.

Aus der DE 10 2017 214 412 A1 ist ein innenliegend angeordneter Elektromotor mit einem Rotor und einem Stator für ein Rollenelement für bandförmiges Walzgut bekannt, wobei der Rotor ohne Zwischenschaltung einer Kupplung oder eines Getriebes direkt mit dem Rollenelement und der Stator direkt mit einem Gestell, an dem das Rollenelement drehbar gelagert ist, verbunden ist. Dabei ist der Drehantrieb als sogenannter 'Außenläufer' ausgeführt, bei dem ein Rotor um einen feststehenden elektrischen Stator rotiert. Im Gegensatz dazu rotiert bei einem als 'Innenläufer' bezeichneten elektrischen Drehantrieb der Rotor - in radialer Richtung betrachtet - innerhalb eines räumlich feststehenden Stators.

Nachteilig an dem von der DE 10 2017 214 412 A1 offenbarten Antrieb ist der Umstand, dass bei einem als Außenläufer ausgeführten elektrischen Drehantrieb aus Platzgründen starke Permanentmagnete für den Stator verwendet werden müssen. Die Permanentmagnete sind an der Innenseite der Mantelfläche des Rollenelements angeordnet und befinden sich somit in unmittelbarer Nähe zu dessen Oberfläche. Da in der Regel (u.a. aus Kostengründen) für Abquetschrollen kein magnetisch abschirmendes Material verwendet wird, greifen die Magnetfelder der Permanentmagneten ohne Abschwächung an die Oberfläche der Abquetschrolle durch und können zu Anhaftungen magnetischer Partikel an dieser führen, sodass während des Walzbetriebs streifenförmige Muster bzw. Abdrücke auf dem gewalzten Metallband entstehen.

Die WO 2019/034677 A1 offenbart eine Vorrichtung zum Beseitigen von Kühlschmiermittel beim Walzen eines Walzbandes in einer Kaltwalzanlage mit zumindest einem Walzgerüst, umfassend: - eine Abquetschrolle, die zwischen einem ersten und einem zweiten Walzständer des Walzgerüsts anordenbar ist und einen Rollenmantel und einen innenliegenden elektrischen Drehantrieb aufweist, - eine Halterung, in der die Abquetschrolle um eine Rotationsachse drehbar gelagert ist, und - eine Steuer- und Regeleinrichtung zum Ansteuern des Drehantriebs und der Anstellvorrichtung, - wobei der Drehantrieb fest mit dem Rollenmantel verbunden ist, einen Stator und einen Rotor aufweist und als Innenläufer ausgebildet ist, und - wobei der Steuer- und Regeleinrichtung eine momentane Geschwindigkeit des Walzbandes hinter dem Walzgerüst bekannt ist und die Steuer- und Regeleinrichtung eingerichtet ist, den Drehantrieb synchron zur momentanen Geschwindigkeit des Walzbandes hinter dem Walzgerüst anzusteuern.

Der Erfindung liegt daher die Aufgabe zugrunde, die Nachteile der aus dem Stand der Technik bekannten Lösungen zum Entfernen von Kühlschmiermittel von einem Walzband zu überwinden und eine konstruktive Lösung anzugeben, die beim Kaltwalzen eines Walzbandes den Eintrag von Kühlschmiermittel in das nachfolgende Walzgerüst - auch bei einem Pegelstand von mehreren Zentimetern auf dem Walzband - unterbindet sowie zuverlässig das Auftreten von Schlupf zwischen einer Abquetschrolle und dem Walzband verhindert. Ein weiterer Aspekt der Erfindung besteht darin, dass die vorgeschlagene Lösung konstruktiv in einfacher Weise realisierbar und auch bei beengten Platzverhältnissen im Walzgerüstbereich einsetzbar ist.

Diese Aufgabe wird erfindungsgemäß durch eine Vorrichtung nach Anspruch 1 gelöst. Bevorzugte Ausgestaltungen der erfindungsgemäßen Vorrichtung sind Gegenstand der abhängigen Vorrichtungsansprüche.

Eine erfindungsgemäße Vorrichtung wird zum Beseitigen von Kühlschmiermittel beim Walzen eines Walzbandes in einer eingangs genannten Kaltwalzanlage eingesetzt. Die Kaltwalzanlage umfasst zumindest ein Walzgerüst, das einen ersten und einem zweiten Walzständer aufweist, zwischen denen das Walzband beim Walzvorgang durchläuft. Die erfindungsgemäße Vorrichtung umfasst eine Abquetschrolle, die zwischen dem ersten und zweiten Walzständer des Walzgerüsts angeordnet werden kann. Dabei weist die Abquetschrolle einen Rollenmantel und einen innenliegenden elektrischen Drehantrieb auf. Der Drehantrieb ist fest (d.h. mechanisch starr) mit dem Rollenmantel verbunden, weist einen Stator und einen Rotor auf und ist als Innenläufer ausgebildet.

Ein innenliegend - d.h. im Innenraum der Abquetschrolle - angeordneter Drehantrieb ermöglicht vorteilhaft einen geringen baulichen Platzbedarf der Abquetschrolle zwischen den betreffenden Walzständern des Walzgerüsts. Der Drehantrieb kann derart ausgestaltet werden, dass nur der feststehende Stator mit elektrischer Antriebsenergie versorgt wird, während der Rotor aufgrund der vom Stator induzierten elektromagnetischen Ströme in Drehbewegung versetzt wird. Auf diese Weise können vorteilhaft verschleißanfällige Schleifkontakte des Drehantriebs vermieden werden. Zudem ermöglicht ein innenliegender Drehantrieb eine kompakte und wartungsfreundliche Konstruktion, weil im Schadensfall die Abquetschrolle inklusive Drehantrieb als Ganzes getauscht werden kann; der separate Austausch des Antriebsmoduls (wie z.B. im Fall einer Abquetschrolle mit extern angeordnetem Antrieb) bzw. einer Kupplung zwischen Antrieb und Abquetschrolle sowie ein Ausrichten derselben entfällt.

Weiterhin bietet ein als Innenläufer ausgebildeter Drehantrieb den Vorteil, dass allfällige Permanentmagneten des innenliegenden Rotors in ausreichendem Abstand zur Oberfläche der Abquetschrolle angeordnet sind und dass bedarfsweise für den Stator magnetisch abschirmendes Material verwendet werden kann. Dadurch wird vorteilhaft ein störender Magnetfelddurchgriff des elektrischen Drehantriebs an die Oberfläche der Abquetschrolle verhindert.

Die erfindungsgemäße Vorrichtung weist weiterhin eine Halterung auf, in der die Abquetschrolle um eine Rotationsachse R drehbar gelagert ist, wobei die Rotationsachse R im Wesentlichen quer zu einer Bandlauflinie verläuft. Zudem umfasst die erfindungsgemäße Vorrichtung eine Anstellvorrichtung zum Anstellen der Abquetschrolle gegen das Walzband sowie eine Steuer- und Regeleinrichtung zum Ansteuern des Drehantriebs und der Anstellvorrichtung. Unter 'Ansteuern' wird in diesem Zusammenhang sowohl das Ausgeben von Steuersignalen oder Steuerbefehlen an das jeweilige Gewerk ohne Rückkoppelung verstanden (Vorsteuerung) als auch das wiederholte Absetzen derselben in Verbindung mit einem Regelkreis.

Weiterhin ist der Steuer- und Regeleinrichtung eine momentane Geschwindigkeit v des Walzbandes hinter dem betreffenden Walzgerüst bekannt. Dabei handelt es sich um den Momentanwert der Bandgeschwindigkeit des Walzbandes entlang einer Bandlauflinie hinter dem Walzgerüst und relativ zu dem Walzgerüst. Diese Geschwindigkeit kann beispielsweise mittels einer Zugmessrolle oder mittels einer (z.B. auf dem Laser-Doppler-Prinzip basierenden) berührungslos arbeitenden Geschwindigkeitsmessvorrichtung messtechnisch erfasst und der Steuer- und Regeleinrichtung übermittelt werden.

Die momentane Geschwindigkeit v des Walzbandes hinter dem Walzgerüst stimmt mit der Umdrehungsgeschwindigkeit der Oberflächen von dessen Arbeitswalzen nur im sogenannten 'neutralen Punkt' innerhalb des Walzspaltes exakt überein. In Bezug auf die rotierenden Arbeitswalzenoberflächen weist das in das Walzgerüst einlaufende Walzband eine Nacheilung, und das aus dem Walzgerüst auslaufende Walzband eine Voreilung auf. Die Geschwindigkeiten des Walzbandes vor und hinter dem Walzgerüst sind dabei miteinander über die Kontinuitätsbedingung bei Annahme der Volumenkonstanz des Walzgutes während des Walzvorganges verknüpft (siehe dazu z.B. Gleichung (3.9) auf Seite 112 in H. Hoffmann, R. Neugebauer und G. Spur (Hrsg.), "Handbuch Umformen", 2. Auflage, Carl Hanser Verlag, 2012, ISBN 978-3-446-42778-5).

Aufgrund der genannten Nach- und Voreilung des Walzbandes relativ zu den rotierenden Arbeitswalzen ist die Steuer- und Regeleinrichtung erfindungsgemäß eingerichtet, den Drehantrieb der Abquetschrolle synchron zur momentanen Geschwindigkeit des Walzbandes hinter dem Walzgerüst anzusteuern. Dies bedeutet, dass die Steuer- und Regeleinrichtung auf Basis der momentanen Walzbandgeschwindigkeit v hinter dem Walzgerüst eine Winkelgeschwindigkeit für den Drehantrieb der Abquetschrolle (welche aufgrund der starren Verbindung zwischen Rollenantrieb und Rollenmantel identisch zur Winkelgeschwindigkeit ω der Abquetschrolle selber ist) derart vorgibt bzw. ansteuert (d.h. in obengenanntem Sinne steuert oder regelt), dass der Rollenmantel im Wesentlichen ohne Schlupf auf dem Walzband abrollt. 'Im Wesentlichen ohne Schlupf' bedeutet in diesem Zusammenhang, dass eine Relativgeschwindigkeit zwischen der Walzbandoberfläche und der Oberfläche des Rollenmantels im Bereich von 0-1% der Walzbandgeschwindigkeit v hinter dem Walzgerüst auftreten kann bzw. von der Steuer- und Regeleinrichtung toleriert wird.

Durch die genannte Ausgestaltung der Steuer- und Regeleinrichtung ist eine besonders genaue Geschwindigkeitsregelung der Abquetschrolle und in Folge dessen eine besonders zuverlässige Vermeidung von Rutschkratzern unabhängig von den aktuellen Reibungsverhältnissen zwischen der Abquetschrolle und dem Walzband - und somit auch beim Einsatz von Kühlschmiermitteln mit einem besonders hohem Schmiermittelanteil von mehr als 10% - möglich. Dies verhindert vorteilhaft die unbeabsichtigte Produktion von Material, das ansonsten zu einem späteren Zeitpunkt abgeschrottet werden muss. Zudem ist der Energiebedarf einer derart synchron angetriebenen Abquetschrolle, der im Dauerbetrieb beispielsweise eine Leistung von 0.5 bis 1kW beträgt, deutlich geringer als beispielweise jener einer Abblasvorrichtung für Emulsionsrückstände.

Weiterhin ist die Anstellvorrichtung eingerichtet, die Halterung mit der Abquetschrolle zwischen einer Ausgangsstellung A und einer Endstellung E zu verfahren bzw. zu verschwenken. Dabei sind die Ausgangsstellung A und die Endstellung E in Bezug auf das Walzgerüst und den Durchmesser der Abquetschrolle derart angeordnet, dass während des Walzens eines Walzbandes in dem Walzgerüst (d.h. bei geschlossenem Walzgerüst) der Rollenmantel der Abquetschrolle in der Ausgangsstellung A das Walzband nicht berührt, sodass das Walzband das Walzgerüst in einer ersten Bandlauflinie B1 durchläuft. Demgegenüber kontaktiert der Rollenmantel der Abquetschrolle in der Endstellung E das Walzband während des Walzens an seiner Oberseite und lenkt es dabei nach unten in eine zweite Bandlauflinie B2 aus, wodurch auf dem Walzband befindliches Kühlschmiermittel seitlich von der Oberseite des Walzbandes abgeleitet wird.

Die Abquetschrolle wird zwischen der Ausgangsstellung A und der Endstellung E normal zu einer Bandlauflinie des Walzbandes verfahren. Der Rollenmantel erstreckt sich quer zum Walzband über dieses hinaus und weist beispielsweise eine zylindrische Form und eine Länge von bis zu zwei Metern entlang der Rotationsachse R der Abquetschrolle auf.

Gemäß der Erfindung ist die Halterung zweistückig, bestehend aus einem ersten und einem zweiten Halterungsteil ausgeführt. 'Zweistückig' bedeutet in diesem Zusammenhang, dass das erste und das zweite Halterungsteil zwei separate Teilstücke darstellen, die nicht unmittelbar - beispielsweise durch Verschrauben, Verschweißen oder eine sonstige starre Verbindung - miteinander verbunden sind. Die Abquetschrolle weist zudem einen ersten und einen zweiten Rollenzapfen auf, wobei der erste Rollenzapfen starr mit dem ersten Halterungsteil und der zweite Rollenzapfen starr mit dem zweiten Halterungsteil verbunden ist. Der erste Rollenzapfen ist fest mit einem Kühlmantel für den Stator verbunden, der den Stator umschließt und mit diesem fest verbunden ist. Der Rotor ist innerhalb des Stators relativ zu diesem drehbar gelagert. Weiterhin ist der Rotor mit einer starren Welle fest verbunden, wobei die starre Welle wiederum über eine flexible Antriebswelle mit dem Rollenmantel fest verbunden ist.

In der beschriebenen zweistückigen Ausgestaltung der Halterung sind das erste und das zweite Halterungsteil indirekt über die Abquetschrolle miteinander verbunden. Über die flexible Welle wird die Drehbewegung des im Inneren der Abquetschrolle angeordneten Rotors mechanisch direkt auf den Rollenmantel übertragen. Durch diese Konstruktion wird vorteilhaft der Platzbedarf der Abquetschrolle in axialer Richtung beim Einbau zwischen die beiden Walzständer des Walzgerüsts minimiert. Die flexible Antriebswelle ermöglicht zudem den Ausgleich geringer Abweichungen in der mechanischen Ausrichtung zwischen erstem und zweitem Halterungsteil zueinander (Fluchtungsfehler). Weiterhin kann über den Kühlmantel die vom elektrischen Drehantrieb erzeugte Wärme von diesem abgeleitet werden.

Bevorzugt weist die Abquetschrolle einen Durchmesser von 300-500mm auf. Dadurch können Emulsionsrückstände auch bei Aufbringung von größeren Emulsionsmengen von bis zu 2000 Litern pro Minute zuverlässig von dem Walzband entfernt werden.

Bevorzugt weisen der erste Rollenzapfen und der den Stator umschließende Kühlmantel mindestens einen Kühlkanal zur Durchleitung eines Kühlmediums auf. Bei dem Kühlmedium kann es sich beispielsweise um Wasser handeln. Da der erste Rollenzapfen starr mit dem ersten Halterungsteil verbunden ist, ist keine Drehdurchführung zur Einleitung eines Kühlmediums in den ersten Rollenzapfen nötig, sodass vorteilhaft eine mechanisch robuste aktive Kühlung für den elektrischen Drehantrieb der Abquetschrolle ermöglicht wird.

In einer weiteren bevorzugten Ausführung der erfindungsgemäßen Vorrichtung weisen der erste und/oder der zweite Rollenzapfen eine Durchführung zur Einleitung eines unter Überdruck stehenden gasförmigen Mediums in das Innere der Abquetschrolle auf. 'Überdruck ' bezeichnet hierbei ein Druckniveau, welches höher liegt als der Umgebungsdruck der Abquetschrolle. Da der erste und der zweite Rollenzapfen starr mit dem ersten bzw. mit dem zweiten Halterungsteil verbunden sind, wird wiederum mittels einer einfachen und robusten mechanischen Durchführung die Erzeugung eines Überdrucks im Inneren der Abquetschrolle bei geringem Aufwand ermöglicht. Unter Überdruck stehende gasförmiges Medien mit sehr geringem Wasseranteil - wie z.B. getrocknete Luft, Stickstoff oder Argon - lassen sich kostengünstig bereitstellen und schützen den innenliegenden elektrischen Drehantrieb der Abquetschrolle vor Korrosion und dem Eindringen von Feuchtigkeit bzw. vor Staubund Abriebpartikeln. Bei der Einleitung eines gasförmigen Mediums mit einer höheren Wärmeleitfähigkeit als Luft - wie beispielsweise Helium - ergibt sich zudem vorteilhaft eine entsprechend höhere Wärmeableitung vom elektrischen Drehantrieb an den Rollenmantel bzw. an die Umgebung.

In einer weiteren bevorzugten Ausführung der erfindungsgemäßen Vorrichtung erstrecken sich das erste und das zweite Halterungsteil entlang der Rotationsachse R der Abquetschrolle über 50-70mm und weisen an einer jeweiligen Kontaktfläche zur Anstellvorrichtung Anfasungen, beispielsweise mit einem Winkel β von 1-2°, auf. An den jeweiligen Kontaktflächen sind das erste und zweite Halterungsteil über lösbare Befestigungsmittel, beispielsweise über Schraubverbindungen, mit der Anstellvorrichtung verbunden.

Die Anstellvorrichtung umfasst beispielsweise zwei hydraulische Aktuatoren, die jeweils einem der Halterungsteile zugeordnet und mit diesem verbunden sind. Zum Verfahren der Abquetschrolle in die Ausgangsstellung A bzw. in die Endstellung E müssen die beiden hydraulischen Aktoren synchron bewegt werden, wobei sich Ungleichmäßigkeiten in der Bewegung der Aktoren nicht gänzlich vermeiden lassen. Da das erste und zweite Halterungsteil über die Abquetschrolle im Wesentlichen miteinander mechanisch starr verbunden sind, können dabei Kippmomente auf die Halterungsteile entstehen. Die Anfasungen erlauben folglich eine geringfügige Verkippung der Halteteile relativ zur Anstellvorrichtung bzw. deren Aktoren und somit ein Ableiten der induzierten Kippmomente. Zudem erlauben die genannten Abmessungen der Halteteile eine optimale Ausnutzung des verfügbaren Platzes zwischen den Walzständern, sodass der Rollenmantel eine große Erstreckung in Bezug auf die Breite des Walzbandes aufweisen und Kühlschmiermittel zuverlässig auch von Walzbändern entfernen kann, die eine maximal mögliche Breite in Bezug auf das Walzgerüst aufweisen.

In einer weiteren bevorzugten Ausgestaltung der erfindungsgemäße Vorrichtung ist die Steuer- und Regeleinrichtung eingerichtet, eine Winkelgeschwindigkeit ω der Abquetschrolle auf Basis einer Drehmomentkennlinie Γ des elektrischen Drehantriebs vorzusteuern.

In einer Kaltwalzanlage werden beispielsweise unterschiedliche Walzbänder miteinander verbunden (verschweißt) und als sogenanntes 'Endlosband' sukzessive von den einzelnen Walzgerüsten der Kaltwalzanlage gewalzt. Die einzelnen Walzbänder weisen in der Regel unterschiedliche Eigenschaften - wie z.B. Verformungswiderstand oder Banddicke - auf, die es erforderlich machen, dass beim Wechsel von aufeinanderfolgenden Walzbändern der Walzspalt eines Walzgerüsts, an dem die erfindungsgemäße Vorrichtung zum Einsatz kommt, und/oder die Geschwindigkeit, mit denen die unterschiedlichen Walzbänder gewalzt werden, geändert werden. Um die Übergangsabschnitte an den betreffenden Walzbändern möglichst kurz zu halten, müssen derartige Änderungen relativ rasch, d.h. beispielsweise innerhalb von 20 bis 50 Metern bezogen auf die Walzbandlänge, erfolgen.

Eine Vorsteuerung der Drehzahl der Abquetschrolle auf Basis ihrer Drehmomentkennlinie Γ ermöglicht vorteilhaft eine rasche Anpassung der Umdrehungsgeschwindigkeit der Abquetschrolle, wohingegen bei einer rein geschwindigkeitsbasierten Regelung der Abquetschrolle deren Geschwindigkeit jener des Walzbands bei einem Geschwindigkeitswechsel aufgrund der inhärenten Verzögerung des Regelkreises über einen bestimmten Zeitraum hinterherlaufen würde (Regelverzögerung). Dies hätte wiederum unerwünschten Schlupf zwischen der Abquetschrolle und der Bandoberfläche zur Folge.

Weiterhin kann eine Drehmomentkennlinie Γ für den elektrischen Drehantrieb der Abquetschrolle empirisch ermittelt werden, indem beispielsweise bei der erstmaligen Installation der Abquetschrolle an dem betreffenden Walzgerüst ein Walzband bei mehreren unterschiedlichen Geschwindigkeiten gewalzt wird, wobei die Abquetschrolle in ihrer Endstellung gegen das Walzband angestellt und der elektrische Drehantrieb rein geschwindigkeitsgeregelt betrieben wird. Wenn dabei das jeweilige Drehmoment des elektrischen Drehantriebs ermittelt wird, bei dem die Winkelgeschwindigkeit der Abquetschrolle der jeweiligen Bandgeschwindigkeit hinter dem Walzgerüst entspricht (d.h. wenn die Geschwindigkeitsregelung sich auf die betreffende Bandgeschwindigkeit eingeregelt hat), dann stellen die so ermittelten Drehmomentwerte die Drehmomentkennlinie Γ als Funktion der Bandgeschwindigkeit v (bzw. der korrespondierenden Winkelgeschwindigkeit ω der Abquetschrolle) dar.

Daher ermöglicht die Kenntnis der Drehmomentkennlinie Γ, bei einem Wechsel der Geschwindigkeit v des Walzbandes das entsprechende Drehmoment des elektrischen Drehantriebs direkt vorzugeben, was auch als 'Vorsteuerung' (feed-forward control) bezeichnet wird. Dadurch wird vorteilhaft die Winkelgeschwindigkeit ω der Abquetschrolle schneller an eine geänderte Bandgeschwindigkeit v angepasst.

In einer weiteren bevorzugten Ausgestaltung der erfindungsgemäßen Vorrichtung ist der elektrische Drehantrieb als Asynchronmotor mit dem Rotor als Kurzschlussläufer ausgebildet und weist eine Messeinrichtung zur Erfassung einer momentanen Winkelgeschwindigkeit ω' der Abquetschrolle (bzw. von deren Rollenmantel) auf. Insbesondere kann es sich bei der gemessenen Winkelgeschwindigkeit ω' um eine Winkelgeschwindigkeit handeln, die wiederholt über kurze Zeitintervalle von z.B. 10-100 Millisekunden messtechnisch ermittelt wird. Diese Messeinrichtung kann beispielsweise ein mit dem Rollenmantel mitrotierendes Polrad und einen an der Halterung der Abquetschrolle angeordneten Drehsensor umfassen, der die Drehbewegung des Polrades berührungslos erfasst.

Besonders vorteilhaft an einer derartigen Ausgestaltung ist der Umstand, dass hierbei vollständig auf Permanentmagnete im Rollenantrieb verzichtet werden kann und es daher zu keinen unerwünschten Ablagerungen von magnetisierbaren Partikeln auf der Oberfläche der Abquetschrolle kommt. Zudem ist eine berührungslose Erfassung der Drehbewegung des Polrads besonders verschleißarm und - im Falle eines auf induktiver Basis arbeitenden Drehsensors - auch unabhängig gegenüber Staub und metallischen Partikeln. Weiterhin ist an der beschriebenen Ausgestaltung vorteilhaft, dass der ein Messignal erzeugende Drehsensor 12 ortsfest am ersten und/oder zweiten Halterungsteil 20, 20' angeordnet ist und daher auf eine Drehdurchführung für entsprechende Signalleitungen zur rotierenden Abquetschrolle 3 verzichtet werden kann.

Alternativ dazu ist gemäß einer weiteren bevorzugten Ausgestaltung der Drehantrieb als Synchronmotor ausgebildet. Dabei kann auf eine sensorbasierte Erfassung der Winkelgeschwindigkeit ω der Abquetschrolle verzichtet werden, da die Drehzahl eines Synchronmotors an dessen Antriebsfrequenz gekoppelt ist und daher aus dieser ohne weitere Sensorik direkt die Winkelgeschwindigkeit ω**,** die für die Abquetschrolle vorgegeben werden muss, um ein schlupfloses Abrollen auf dem Walzband zu erzielen, ermittelt werden kann. Dadurch können beispielsweise ein Polrad und ein Drehsensor entfallen und eine noch kompaktere Bauform für die erfindungsgemäße Vorrichtung erreicht werden.

Weiterhin wird die Aufgabe erfindungsgemäß durch ein Verfahren zum Beseitigen von Kühlschmiermittel beim Walzen eines Walzbandes in einer eingangs genannten Kaltwalzanlage gelöst, an dem eine erfindungsgemäße Vorrichtung angeordnet ist. Bei dem erfindungsgemäßen Verfahren
- steuert in einem ersten Schritt vor dem Einfädeln eines Bandkopfes des Walzbandes in das Walzgerüst die Steuer- und Regeleinrichtung die Anstellvorrichtung derart an, dass die Abquetschrolle in eine Ausgangsstellung A verfahren wird,
- in einem zweiten Schritt nach dem Einfädeln des Walzbandes in das Walzgerüst die Steuer- und Regeleinrichtung die Anstellvorrichtung derart ansteuert, dass die Abquetschrolle in die Endstellung E verfahren wird und das Walzband nach unten in eine zweite Bandlauflinie B2 auslenkt, und
- in einem dritten Schritt das Walzband in dem Walzgerüst gewalzt wird, wobei Kühlschmiermittel auf das Walzband aufgebracht und die momentane Geschwindigkeit v des Walzbandes hinter dem Walzgerüst messtechnisch erfasst und der Steuer- und Regeleinrichtung zugeleitet wird, wobei die Steuer- und Regeleinrichtung den Drehantrieb derart ansteuert, dass der Rollenmantel im Wesentlichen ohne Schlupf auf einer Oberseite des Walzbandes abrollt und dabei das Kühlschmiermittel seitlich von der Oberseite des Walzbandes ableitet.

Die vorteilhaften Wirkungen des erfindungsgemäßen Verfahrens korrespondieren mit jenen der erfindungsgemäßen Vorrichtung.

Die oben beschriebenen Eigenschaften, Merkmale und Vorteile der Erfindung sowie die Art und Weise, wie diese erreicht werden, werden klarer und deutlicher verständlich im Zusammenhang mit der Beschreibung des folgenden Ausführungsbeispiels der Erfindung, das im Zusammenhang mit den Figuren näher erläutert wird. Gleiche Teile und Gewerke in den Figuren sind jeweils mit denselben Bezeichnern versehen. Es zeigen:
Figur 1 (FIG 1)einen Querschnitt durch eine Abquetschrolle gemäß dem Ausführungsbeispiel der erfindungsgemäßen Vorrichtung;
Figur 2A (FIG 2A) eine in Ausgangsstellung A verschwenkte Abquetschrolle am Walzgerüst gemäß Ausführungsbeispiel;
Figur 2B (FIG 2B) eine in Endstellung E verschwenkte Abquetschrolle am Walzgerüst gemäß Ausführungsbeispiel;
Figur 2C (FIG 2C) die am Walzgerüst angeordnete Abquetschrolle aus FIG 2A, 2B mit Anstellvorrichtung entgegengesetzt zu einer ersten bzw. zweiten Bandlauflinie B1 bzw. B2 gesehen;
Figur 3 (FIG 3) ein Halterungsteil für die Abquetschrolle gemäß Ausführungsbeispiel; und
Figur 4 (FIG 4) ein Blockschaltbild der erfindungsgemäßen Vorrichtung.

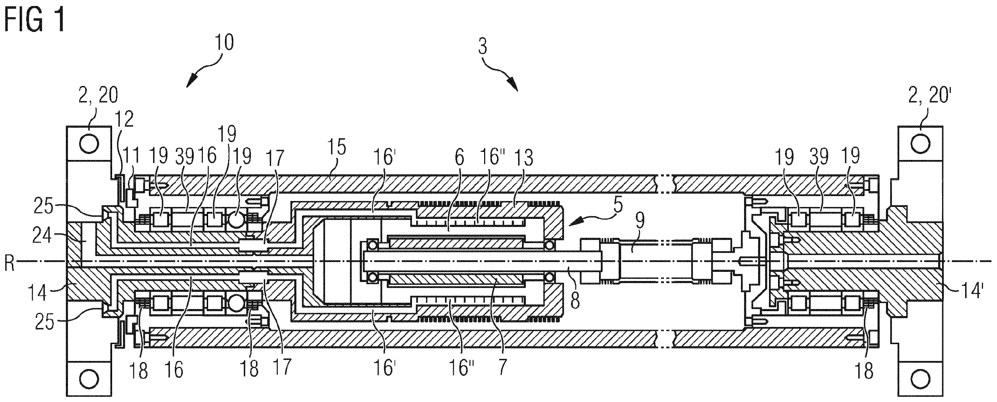

FIG 1 zeigt einen Querschnitt durch eine Abquetschrolle 3 eines Ausführungsbeispiels der erfindungsgemäßen Vorrichtung 1. Die Abquetschrolle 3 (konkret: deren als beispielsweise in Form eines Hohlzylinders ausgebildeter Rollenmantel 15) ist an den beiden axialen Enden mittels Lagern 19 und Distanzbuchsen 39 jeweils über einen ersten und zweiten Rollenzapfen 14, 14' in einem ersten bzw. zweiten Halterungsteil 20, 20' einer Halterung 2 um eine Rotationsachse R drehbar gelagert. Der erste und zweite Rollenzapfen 14, 14' ist dabei jeweils starr mit dem ersten bzw. zweiten Halterungsteil 20, 20' verbunden und weist jeweils einen Medienanschluss 24 zur Einleitung eines gasförmigen Mediums in den Innenraum der Abquetschrolle 3 auf, wodurch dort ein höheres Druckniveau in Relation zum Umgebungsdruck hergestellt und vorteilhaft das Eindringen von Feuchtigkeit und Staubpartikeln verhindert wird.

Zudem weist der erste Rollenzapfen 14 Medienanschlüsse 25 für die Zu- und Ausleitung einer Kühlflüssigkeit auf. Die Kühlflüssigkeit - beispielsweise Wasser - wird in Kühlkanälen 16 durch den erste Rollenzapfen 14 über Durchführungen 17 in Kühlkanäle 16' eines Motorgehäuses 13 des elektrischen Drehantrieb 5 der Abquetschrolle 3 eingeleitet bzw. aus diesem ausgeleitet.

Das Motorgehäuse 13 ist fest mit dem ersten Rollenzapfen 14 verbunden und umschließt den elektrischen Drehantrieb 5. Der Drehantrieb 5 ist als Innenläufer ausgebildet und umfasst einen innenliegenden Rotor 7 sowie einen - in axialer Richtung gesehen - außenliegenden Stator 6. Der Stator 6 weist beispielsweise Spulenwicklungen zur Erzeugung eines elektromagnetischen Drehfeldes auf (in FIG 1 nicht dargestellt) und ist fest mit dem Motorgehäuse 13 verbunden.

Das eingeleitete Kühlmittel strömt aus den Kühlkanälen 16' des Motorgehäuses 13 in entsprechende Kühlkanäle 16" im bzw. am Stator 6 und nimmt beim Durchströmen vom Drehantrieb 5 erzeugte Abwärme auf. Die Kühlkanäle 16" sind im vorliegenden Ausführungsbeispiel als ein oder mehrere spiralförmige Kanäle an der Außenfläche des Stators 6 ausgeführt. Der erste und zweite Rollenzapfen 14, 14', das Motorgehäuse 13 und der Stator 6 bilden in Bezug auf das erste und zweite Halterungsteil 20, 20' die feststehenden Teile der Abquetschrolle 3. Weiterhin sind zwischen den Lagersitzen der Lager 19 und den relativ dazu rotierbaren Teilen der Abquetschrolle 3 Dichtungsringe 18 angeordnet, um das Eindringen von feinen Partikeln in die Lager 19 bzw. in den Innenraum der Abquetschrolle 3 zu verhindern.

Der Rotor 7 ist mit einer starren Abgangswelle 8 verbunden, die in axialer Richtung aus dem Motorgehäuse 13 herausragt und über eine flexible Antriebswelle 9 mit dem Rollenmantel 15 der Abquetschrolle 3 verbunden ist. Die Flexibilität der Antriebswelle 9 gestattet einen bestimmten mechanischen Versatz normal zu ihrer Achsrichtung (Fluchtungsfehler), jedoch verhält sich die Antriebswelle 9 starr in Bezug auf ihre Umfangsrichtung.

Weiterhin umfasst die erfindungsgemäße Vorrichtung 1 eine Messeinrichtung 10 zur Erfassung einer momentanen Winkelgeschwindigkeit ω' der Abquetschrolle 3. Die Messeinrichtung 10 ist gemäß dargestelltem Ausführungsbeispiel als fest am Rollenmantel 15 angeordnetes Polrad 11 in Verbindung mit einem Drehsensor 12 ausgestaltet. Der Drehsensor 12 ist als berührungslos arbeitende Messvorrichtung am ersten Halterungsteil 20 befestigt und ausgestaltet, ein Signal zu erzeugen, das zu einer Relativbewegung des mit dem Rollenmantel mitrotierenden Polrads 11 korrespondiert. Aus Redundanzgründen kann eine derartige Messvorrichtung auch an beiden axialen Enden des Abquetschrolle 3 angeordnet sein (in FIG 1 nicht dargestellt).

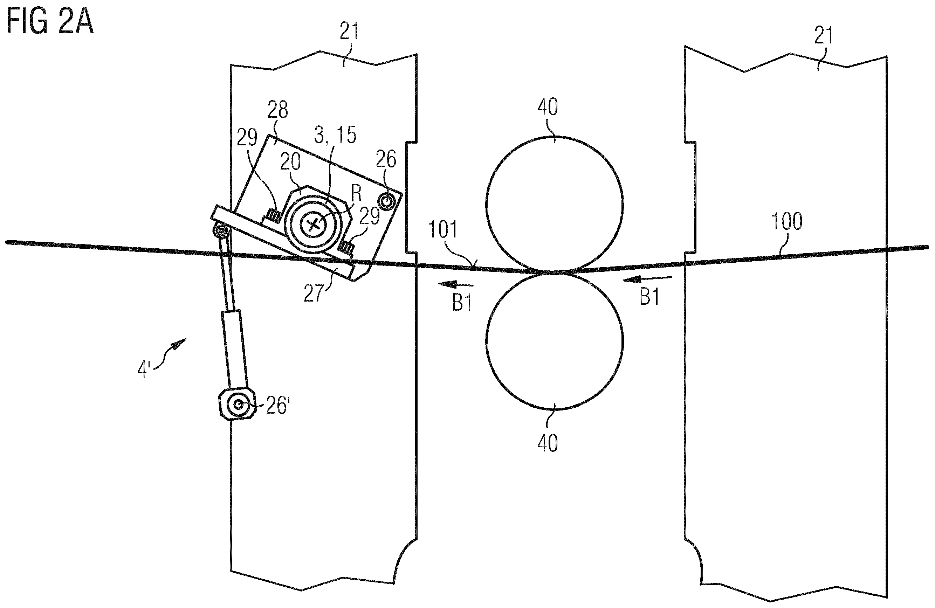

FIG 2A zeigt eine Ansicht des Ausführungsbeispiels aus FIG 1 entlang der Rotationsachse R der Abquetschrolle 3. Die dicke durchgezogene Linie stellt ein flaches Walzband 100 dar, welches sich entlang einer ersten Bandlauflinie B1 (in FIG 2A von rechts nach links verlaufend) vor einem ersten Walzständer 21 des Walzgerüsts durch dieses durchbewegt. Von dem ersten Walzständer 21 ist in FIG 2A nur der Mittenbereich in Bezug auf seine Höhe mit dem Gerüstfenster, jedoch ohne Arbeits- und allfällige weitere Walzen dargestellt. Das Walzgerüst ist geschlossen, d.h. die obere und untere Arbeitswalze 40 des Walzgerüsts sind jeweils an das Walzband 100 angestellt, welches das Walzgerüst entlang einer ersten Bandlauflinie B1 durchläuft. Im unmittelbaren Bereich des Walzspalts verläuft die erste Bandlauflinie B1 im Wesentlichen - d.h. in einem Bereich von ±5° - horizontal, wobei in FIG 2A eine geringfügige Auslenkung sichtbar ist, die durch dem Walzgerüst vor- und nachgeordnete Rollen (in FIG 2A nicht dargestellt) verursacht wird.

Die Abquetschrolle 3 bzw. ihr Rollenmantel 15 sind in der gezeigten Perspektive vor dem ersten Halterungsteil 20 dargestellt und an diesem drehbar befestigt. Das erste Halterungsteil 20 ist über Schrauben 29 an einem Sockel 27 befestigt, der wiederum starr mit einer verschwenkbaren Plattform 28 verbunden ist. Die Plattform 28 ist mittels einer ersten Drehbefestigung 26 an dem ersten Walzständer 21 drehbar befestigt. Unterhalb der Plattform 28 ist ein erster Aktuator 4' (im dargestellten Ausführungsbeispiel in Form eines Hydraulikzylinders) einer Anstellvorrichtung 4 an ihrem unteren Ende über eine zweite Drehbefestigung 26' ebenfalls am ersten Walzständer 21 drehbar befestigt. Der Aktuator 4' ist an dem der zweiten Drehbefestigung 26' gegenüberliegenden Ende mittels einer dritten Drehbefestigung 26" am Sockel 27 drehbar befestigt.

In FIG 2A ist die Anstellvorrichtung 4 bzw. deren erster Aktuator 4' derart eingestellt (Hydraulikzylinder ausgefahren), dass die Abquetschrolle 3 in der Ausgangsstellung A oberhalb des Walzbandes 100 positioniert ist und die Oberseite 101 des Walzbandes 100 daher nicht berührt.

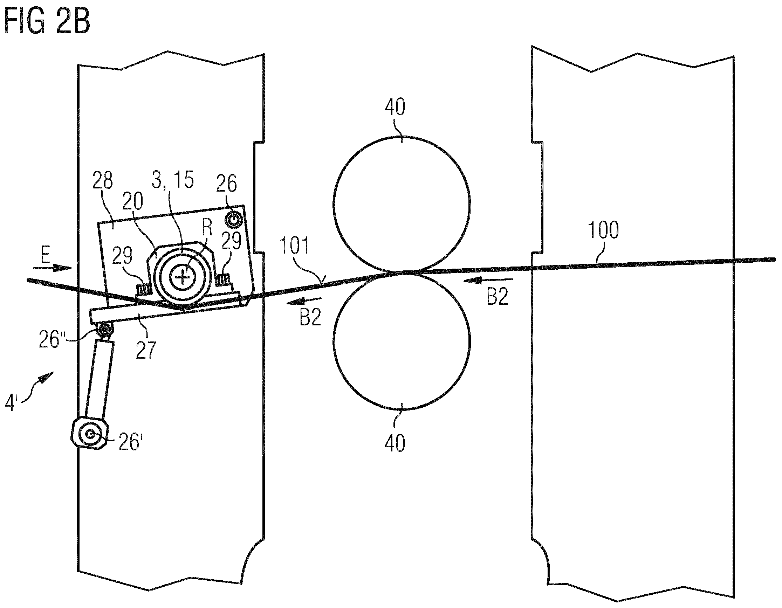

FIG 2B zeigt dieselbe Ansicht des Ausführungsbeispiels wie FIG 2A mit dem Unterschied, dass die Anstellvorrichtung 4 bzw. deren erster Aktuator 4' derart eingestellt ist (Hydraulikzylinder eingefahren), dass die Abquetschrolle 3 in der Endstellung E positioniert ist, wobei der Rollenmantel 15 die Oberseite 101 des Walzbandes 100 berührt und das Walzband 100 dadurch nach unten auslenkt, sodass das Walzband 100 das Walzgerüst entlang einer zweiten Bandlauflinie B2 durchläuft. In der durch die Auslenkung verursachten Senke sammelt sich einlaufseitig - d.h. in FIG 2B rechts der Abquetschrolle 3 - überschüssiges Kühlschmiermittel an (in FIG 2B nicht dargestellt), das in weiterer Folge in seitlicher Richtung quer zur zweiten Bandlauflinie B2 (d.h. normal zur Zeichenebene von FIG 2B) von dem Walzband 100 abgeleitet wird.

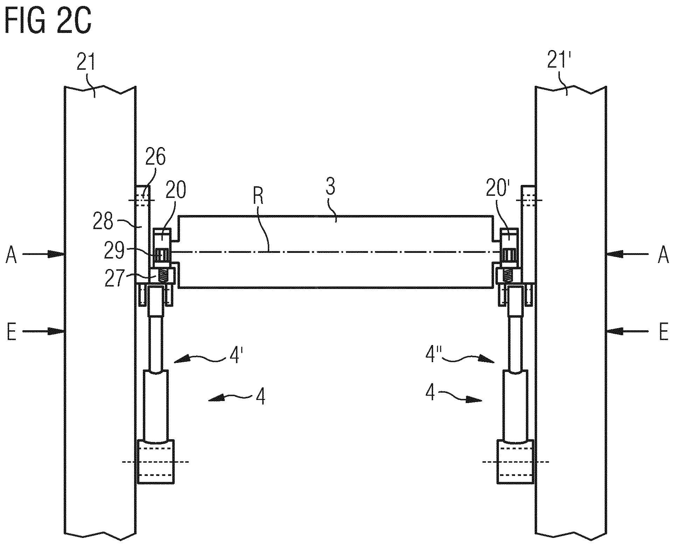

FIG 2C zeigt eine Ansicht des Ausführungsbeispiels aus FIG 1 parallel zur Rotationsachse R der Abquetschrolle 3 und entgegen einer ersten bzw. zweiten Bandlauflinie B1 bzw. B2, wobei sich die Abquetschrolle 3 in der Ausgangsposition A oberhalb der Endposition E befindet. Weiterhin ist dargestellt, dass die Abquetschrolle 3 in Richtung ihrer Rotationsachse R gesehen zwischen dem ersten und zweiten Walzständer 21, 21' des Walzgerüsts angeordnet und dabei an ihren beiden axialen Enden jeweils in dem ersten bzw. zweiten Halterungsteil 20, 20' drehbar gelagert ist. Das erste bzw. zweite Halterungsteil 20, 20' ist jeweils wie in Zusammenhang mit FIG 2A beschrieben mit einem ersten bzw. zweiten Aktuator 4', 4" der Anstellvorrichtung 4 verbunden. Zum Verfahren der Abquetschrolle 3 zwischen der Ausgangsstellung A und der Endstellung E werden der erste und zweite Aktuator 4', 4" synchron zueinander bewegt.

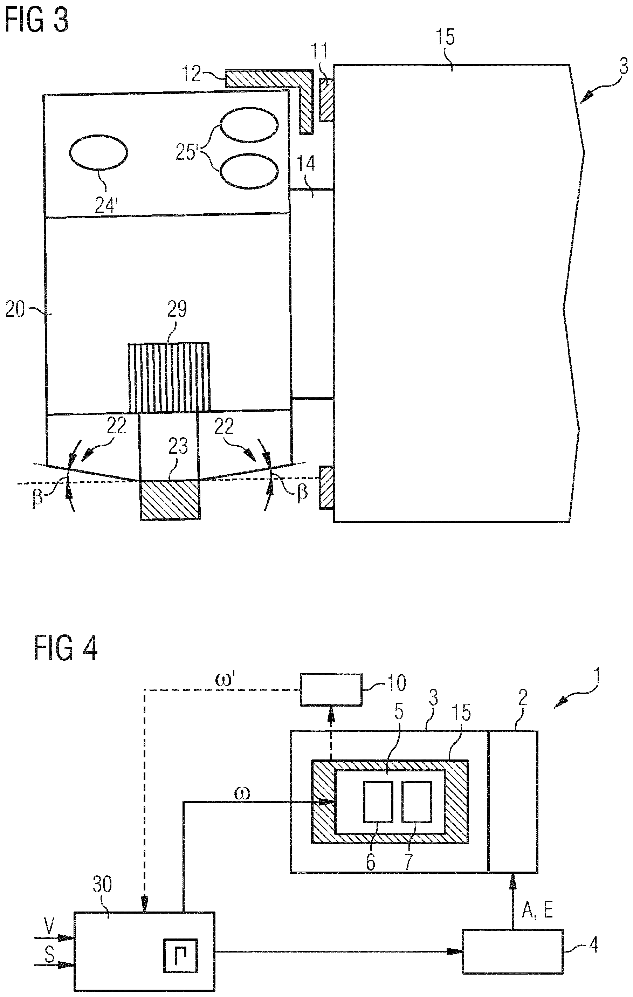

FIG 3 zeigt ein Halterungsteil 20 für die Abquetschrolle 3. Die Abquetschrolle 3 ist über den ersten Rollenzapfen 14 im ersten Halterungsteil 20 drehbar gelagert. Zwischen dem am ersten Halterungsteil 20 angeordneten Drehsensor 12 und dem am Rollenmantel 15 befestigten Polrad 11 verbleibt ein Luftspalt, beispielsweise im Ausmaß von wenigen Millimetern. Aus der oberen Abschrägung des ersten Halterungsteils 20 sind ein Medienanschluss 24' zur Einleitung des gasförmigen Mediums bzw. Medienanschlüsse 25' zur Ein- und Ausleitung von Kühlflüssigkeit in die Abquetschrolle 3 angeordnet. Entsprechende Medienkanäle im ersten Halterungsteil 20 münden in die dazu korrespondierenden Medienanschlüsse 24, 25 im ersten Rollenzapfen 14. Der Medienanschluss 24 bzw. 24' dient gleichzeitig auch zur Durchführung der Anschlüsse des elektrischen Drehantriebs 5. Da der erste Rollenzapfen 14 nicht rotierbar und fest mit dem ersten Halterungsteil 20 verbunden ist, lassen sich die entsprechenden Übergangsstellen gegen den Austritt von Kühl- oder gasförmigem Medium zuverlässig abdichten. Die Medien werden somit durch das erste Halterungsteil 20 in die Abquetschrolle 3 durchgeleitet, wobei die Medienanschlüsse 24', 25' auf einer Fläche des ersten Halterungsteils 20 angeordnet sind, deren Normalvektor senkrecht zur Rotationsachse R der Abquetschrolle 3 orientiert ist. Dadurch lässt sich vorteilhaft eine gute Ausnutzung des zwischen dem ersten und zweiten Walzständer 21, 21' vorhandenen Platzes für die erfindungsgemäße Vorrichtung 1 realisieren.

Weiterhin ist in FIG 3 dargestellt, dass das erste Halterungsteil 20 an seiner Unterseite im Bereich der Schraubverbindung 29 eine ebene Kontaktfläche 23 zum Kontakt mit dem Sockel 27 (dieser ist in FIG 3 nicht dargestellt) aufweist. Quer dazu, d.h. in Rotationsrichtung R der Abquetschrolle 3, weist die Unterseite des ersten Halterungsteils 20 Anfasungen 22 in Form von abgeschrägten Flächen auf, wobei der Winkel β zwischen der Kontaktfläche 23 und den Anfasungen 22 jeweils wenige Winkelgrade, beispielsweise 1-2°, beträgt. Das zweite Halterungsteil 20' verfügt über gleichartige Anfasungen 22. Durch die Anfasungen 22 wird eine geringfügige Verkippung zwischen dem ersten und zweiten Halterungsteil 20, 20' einerseits und dem jeweils zugehörigen Sockel 27 gestattet, sodass beim Verfahren der Abquetschrolle 3 zwischen Ausgangs- und Endstellung A bzw. E geringfügige Asynchronitäten zwischen den einzelnen Aktoren 4' und 4" der Anstellvorrichtung 4 ausgeglichen werden können.

FIG 4 zeigt ein Blockschaltbild der einzelnen Gewerke der erfindungsgemäßen Vorrichtung 1: der einen Stator 6 und einen Rotor 7 aufweisende Drehantrieb 5 der Abquetschrolle 3 ist fest mit dem Rollenmantel 15 verbunden, was durch eine Schraffur symbolisiert wird. Wenn die Abquetschrolle 3 gegen das Walzband 100 angestellt ist (Endstellung E), steuert eine Steuer- und Regeleinrichtung 30 den Drehantrieb 5 an bzw. gibt diesem eine Winkelgeschwindigkeit ω für die Abquetschrolle 3 vor, die einer momentanen Geschwindigkeit v des Walzbandes 100 hinter dem Walzgerüst (in FIG 4 nicht dargestellt) entspricht, sodass der Rollenmantel 15 ohne Schlupf auf dem Walzband 100 abrollt.

Eine momentane Geschwindigkeit v des Walzbandes 100 hinter dem Walzgerüst wird laufend messtechnisch erfasst und der Steuer- und Regeleinrichtung 30 zugeleitet. Die Steuer- und Regeleinrichtung 30 ermittelt die vorzugebende Winkelgeschwindigkeit ω im Falle eines als Synchronmotors ausgebildeten Drehantriebs 5 auf Basis der momentane Geschwindigkeit v und des Durchmessers des Rollenmantels 15, da in diesem Fall die Winkelgeschwindigkeit des vom Stator 6 des Drehantrieb 5 erzeugten elektrischen Drehfeldes immer mit jener des Rotors 7 übereinstimmt.

Bei einem als Asynchronmotor ausgebildeten Drehantrieb 5 ermittelt die Steuer- und Regeleinrichtung 30 die Winkelgeschwindigkeit ω, die dem Drehantrieb 5 vorgegeben wird, unter zusätzlicher Einbeziehung der mit Hilfe der Messeinrichtung 10 ermittelten Winkelgeschwindigkeit ω' des Rollenmantels 15 (gestrichelter Pfeil in FIG 4), da in diesem Fall das vom Stator 6 erzeugte elektrische Drehfeld der Winkelgeschwindigkeit des Rotors 7 - in Abhängigkeit von der momentanen Drehmomentbelastung des Drehantriebs 5 - vorauseilt. In beiden Fällen (Drehantrieb 5 als Synchron- oder Asynchronmotor) kann die Ermittlung der vorzugebenden Winkelgeschwindigkeit ω durch die Steuer- und Regeleinrichtung 30 unter Einbeziehung einer Drehmomentkennlinie Γ erfolgen, um bei Änderungen der Geschwindigkeit v des Walzbandes 100 hinter dem Walzgerüst die Winkelgeschwindigkeit ω der Abquetschrolle 3 schneller an diese Änderungen anzupassen.

Weiterhin steuert die Steuer- und Regeleinrichtung 30 nach Maßgabe von externen Steuerdaten S, die der Steuer- und Regeleinrichtung 30 zugeführt werden, die Anstellvorrichtung 4 derart, dass die Abquetschrolle 3 zwischen einer Ausgangsstellung (A) und einer Endstellung E verfahren wird. In Bezug auf das in FIG 2C dargestellte Ausführungsbeispiel steuert die Steuer- und Regeleinrichtung 30 die beiden Aktuatoren 4', 4" synchron an, sodass das erste und zweite Halterungsteil 20, 20' der Halterung 2 eine synchrone Bewegung zum Verfahren/Verschwenken der Abquetschrolle 3 ausführen. Die Steuerdaten S hängen im Wesentlichen vom Zustand des in dem betreffenden Walzgerüst gewalzten Walzbandes 100 ab (wenn sich z.B. momentan kein Walzband 100 oder nur dessen Bandanfang durch das Walzgerüst bewegt, dann ist die Abquetschrolle 3 in die Ausgangsstellung A zu verfahren, um ein ungestörtes Einfädeln des Walzbandes 100 zu ermöglichen) und geben der Steuer- und Regeleinrichtung 30 vor, zu welchem Zeitpunkt die Abquetschrolle 3 an das das Walzgerüst durchlaufende Walzband 100 anzustellen bzw. von diesem wegzubewegen ist.

### Bezugszeichenliste

- 1: Vorrichtung
- 2: Halterung
- 3: Abquetschrolle
- 4, 4', 4": Anstellvorrichtung, Aktuator
- 5: elektrischer Drehantrieb
- 6: Stator
- 7: Rotor
- 8: Abgangswelle
- 9: flexible Antriebswelle
- 10: Messeinrichtung
- 11: Polrad
- 12: Drehsensor
- 13: Motorgehäuse
- 14, 14': Rollenzapfen
- 15: Rollenmantel
- 16, 16', 16": Kühlkanal
- 17: Durchführung
- 18: Dichtungsring
- 19: Lager
- 20, 20': Halterungsteil
- 21, 21': Walzständer
- 22: Anfasung
- 23: Kontaktfläche
- 24, 24': Medienanschluss Gas
- 25, 25': Medienanschluss Kühlflüssigkeit
- 26, 26', 26": Drehbefestigung
- 27: Sockel
- 28: Plattform
- 29: Schraube
- 30: Steuer- und Regeleinrichtung
- 39: Distanzbuchse
- 40: Arbeitswalze
- 100: Walzband
- 101: Oberseite Walzband
- A: Ausgangsstellung
- B1, B2: erste, zweite Bandlauflinie
- E: Endstellung
- R: Rotationsachse
- S: Steuerdaten
- v: Geschwindigkeit Walzband
- β: Winkel
- ω, ω': Winkelgeschwindigkeit

## Patentansprüche

1. Vorrichtung (1) zum Beseitigen von Kühlschmiermittel beim Walzen eines Walzbandes (100) in einer Kaltwalzanlage mit zumindest einem Walzgerüst, umfassend
- eine Abquetschrolle (3), die zwischen einem ersten und einem zweiten Walzständer (21, 21') des Walzgerüsts anordenbar ist und einen Rollenmantel (15) und einen innenliegenden elektrischen Drehantrieb (5) aufweist,
- eine Halterung (2), in der die Abquetschrolle (3) um eine Rotationsachse (R) drehbar gelagert ist,
- eine Anstellvorrichtung (4) zum Anstellen der Abquetschrolle (3) gegen das Walzband (100), und
- eine Steuer- und Regeleinrichtung (30) zum Ansteuern des Drehantriebs (5) und der Anstellvorrichtung (4),
- wobei der Drehantrieb (5) fest mit dem Rollenmantel (15) verbunden ist, einen Stator (6) und einen Rotor (7) aufweist und als Innenläufer ausgebildet ist,
- wobei der Steuer- und Regeleinrichtung (30) eine momentane Geschwindigkeit (v) des Walzbandes (100) hinter dem Walzgerüst bekannt ist und die Steuer- und Regeleinrichtung (30) eingerichtet ist, den Drehantrieb (5) synchron zur momentanen Geschwindigkeit (v) des Walzbandes (100) hinter dem Walzgerüst anzusteuern,
- wobei die Anstellvorrichtung (4) eingerichtet ist, die Halterung (2) mit der Abquetschrolle (3) zwischen einer Ausgangsstellung (A) und einer Endstellung (E) zu verfahren,
- wobei während des Walzens des Walzbandes (100) in dem Walzgerüst der Rollenmantel (15)
-- in der Ausgangsstellung (A) das Walzband (100) nicht berührt, sodass das Walzband (100) das Walzgerüst in einer ersten Bandlauflinie (B1) durchläuft, und
-- in der Endstellung (E) das Walzband (100) an einer Oberseite (11) kontaktiert und dabei nach unten in eine zweite Bandlauflinie (B2) auslenkt, wobei
- die Halterung (2) zweistückig aus einem ersten und einem zweiten Halterungsteil (20, 20') ausgeführt ist und die Abquetschrolle (3) einen ersten und einen zweiten Rollenzapfen (14, 14') aufweist,
- der erste Rollenzapfen (14) starr mit dem ersten Halterungsteil (20) und der zweite Rollenzapfen (14') starr mit dem zweiten Halterungsteil (20') verbunden ist,
- der erste Rollenzapfen (14) fest mit einem Kühlmantel (13) für den Stator (6) verbunden ist, der den Stator (6) umschließt und mit diesem fest verbunden ist, und
- dass der Rotor (7) mit einer starren Welle (8) fest verbunden ist, die über eine flexible Antriebswelle (9) mit dem Rollenmantel (15) fest verbunden ist.

2. Vorrichtung (1) nach Anspruch 1, wobei der Durchmesser der Abquetschrolle (3) 300-500mm beträgt.

3. Vorrichtung (1) nach einem der vorangegangenen Ansprüche, wobei der erste Rollenzapfen (14) und der Kühlmantel (13) mindestens einen Kühlkanal (16) zur Durchleitung eines Kühlmediums aufweisen.

4. Vorrichtung (1) nach einem der vorangegangenen Ansprüche, wobei der erste und/oder der zweite Rollenzapfen (14, 14') eine Durchführung (17) zur Einleitung eines unter Überdrück stehenden gasförmigen Mediums in das Innere der Abquetschrolle (3) aufweisen.

5. Vorrichtung (1) nach einem der vorangegangenen Ansprüche, wobei sich das erste und das zweite Halterungsteil (14, 14') entlang der Rotationsachse (R) über 50-70mm erstrecken und an einer jeweiligen Kontaktfläche (23) zur Anstellvorrichtung (4) Anfasungen (22) aufweisen.

6. Vorrichtung (1) nach einem der vorangegangenen Ansprüche, wobei die Steuer- und Regeleinrichtung (30) eingerichtet ist, eine Winkelgeschwindigkeit (ω) der Abquetschrolle (3) auf Basis einer Drehmomentkennlinie (Γ) des elektrischen Drehantriebs (5) vorzusteuern.

7. Vorrichtung (1) nach einem der vorangegangenen Ansprüche, wobei der elektrische Drehantrieb (5) als Asynchronmotor mit dem Rotor (7) als Kurzschlussläufer ausgebildet ist und eine Messeinrichtung (10) zur Erfassung einer momentanen Winkelgeschwindigkeit (ω') der Abquetschrolle (3) aufweist.

8. Vorrichtung (1) nach Anspruch 7, wobei die Messinrichtung (10) ein an der Abquetschrolle (3) angeordnetes Polrad (11) und einen an der Halterung (2) angeordneten Drehsensor (12) umfasst.

9. Vorrichtung (1) nach einem der Ansprüche 1 bis 6, wobei der elektrische Drehantrieb (5) als Synchronmotor ausgebildet ist.

10. Verfahren zum Beseitigen von Kühlschmiermittel beim Walzen eines Walzbandes (100) in einer Kaltwalzanlage mit zumindest einem Walzgerüst, an dem eine Vorrichtung (1) nach einem der vorhergehenden Ansprüche angeordnet ist, wobei
- in einem ersten Schritt vor dem Einfädeln eines Bandkopfes des Walzbandes (100) in das Walzgerüst die Steuer- und Regeleinrichtung (30) die Anstellvorrichtung (4) derart ansteuert, dass die Abquetschrolle (3) in eine Ausgangsstellung (A) verfahren wird,
- in einem zweiten Schritt nach dem Einfädeln des Walzbandes (100) in das Walzgerüst die Steuer- und Regeleinrichtung (30) die Anstellvorrichtung (4) derart ansteuert, dass die Abquetschrolle (3) in die Endstellung (E) verfahren wird und das Walzband (100) nach unten in eine zweite Bandlauflinie (B2) auslenkt, und
- in einem dritten Schritt das Walzband (100) in dem Walzgerüst gewalzt wird, wobei Kühlschmiermittel auf das Walzband aufgebracht und die momentane Geschwindigkeit (v) des Walzbandes (100) hinter dem Walzgerüst messtechnisch erfasst und der Steuer- und Regeleinrichtung (30) zugeleitet wird, wobei die Steuer- und Regeleinrichtung (30) den Drehantrieb (5) derart ansteuert, dass der Rollenmantel (15) im Wesentlichen ohne Schlupf auf einer Oberseite (101) des Walzbandes abrollt und dabei das Kühlschmiermittel seitlich von der Oberseite (101) ableitet.

## Claims

1. Device (1) for removing cooling lubricant during rolling of a rolled strip (100) in a cold rolling mill with at least one roll stand, comprising
- a squeezing roller (3), which can be arranged between a first and a second roll housing (21, 21') of the roll stand and has a roller shell (15) and an internal electric rotary drive (5),
- a mount (2), in which the squeezing roller (3) is mounted rotatably about an axis of rotation (R),
- a positioning device (4) for positioning the squeezing roller (3) against the rolled strip (100), and
- an open-loop and closed-loop control means (30) for activating the rotary drive (5) and the positioning device (4),
- wherein the rotary drive (5) is fixedly connected to the roller shell (15), has a stator (6) and a rotor (7) and is in the form of an internal rotor,
- wherein a current speed (v) of the rolled strip (100) downstream of the roll stand is known to the open-loop and closed-loop control means (30), and the open-loop and closed-loop control means (30) is designed to activate the rotary drive (5) synchronously for the current speed (v) of the rolled strip (100) downstream of the roll stand,
- wherein the positioning device (4) is designed to move the mount (2) with the squeezing roller (3) between a starting position (A) and an end position (E),
- wherein, during rolling of the rolled strip (100) in the roll stand, the roller shell (15)
-- in the starting position (A), does not touch the rolled strip (100), and therefore the rolled strip (100) passes through the roll stand in a first strip running line (B1), and
-- in the end position (E), contacts the rolled strip (100) on an upper side (11) and, in the process, deflects it downwards into a second strip running line (B2),
wherein
- the mount (2) is formed in two pieces consisting of a first and a second mount part (20, 20') and the squeezing roller (3) has a first and a second roller pin (14, 14'),
- the first roller pin (14) is rigidly connected to the first mount part (20) and the second roller pin (14') is rigidly connected to the second mount part (20'),
- the first roller pin (14) is fixedly connected to a cooling shell (13) for the stator (6), the cooling shell surrounding the stator (6) and being fixedly connected thereto, and
- the rotor (7) is fixedly connected to a rigid shaft (8), which is fixedly connected to the roller shell (15) via a flexible drive shaft (9).

2. Device (1) according to Claim 1, wherein the diameter of the squeezing roller (3) is 300-500 mm.

3. Device (1) according to either one of the preceding claims, wherein the first roller pin (14) and the cooling shell (13) have at least one cooling channel (16) for conducting a cooling medium.

4. Device (1) according to any one of the preceding claims, wherein the first and/or the second roller pin (14, 14') has/have a passage (17) for introducing a gaseous medium, which is under positive pressure, into the interior of the squeezing roller (3).

5. Device (1) according to any one of the preceding claims, wherein the first and the second mount part (14, 14') extend over 50-70 mm along the axis of rotation (R) and have bevels (22) on a respective contact surface (23) with the positioning device (4).

6. Device (1) according to any one of the preceding claims, wherein the open-loop and closed-loop control means (30) is designed for feed-forward controlling of an angular speed (ω) of the squeezing roller (3) on the basis of a torque characteristic curve (Γ) of the electric rotary drive (5).

7. Device (1) according to any one of the preceding claims, wherein the electric rotary drive (5) is in the form of an asynchronous motor with the rotor (7) as a short-circuit rotor and has a measuring means (10) for detecting a current angular speed (ω') of the squeezing roller (3).

8. Device (1) according to Claim 7, wherein the measuring means (10) comprises a pole wheel (11) arranged on the squeezing roller (3) and a rotation sensor (12) arranged on the mount (2).

9. Device (1) according to any one of Claims 1 to 6, wherein the electric rotary drive (5) is in the form of a synchronous motor.

10. Method for removing cooling lubricant during rolling of a rolled strip (100) in a cold rolling mill with at least one roll stand on which a device (1) according to any one of the preceding claims is arranged, wherein
- in a first step, before a strip head of the rolled strip (100) is threaded into the roll stand, the open-loop and closed-loop control means (30) activates the positioning device (4) in such a way that the squeezing roller (3) is moved into a starting position (A),
- in a second step, after the rolled strip (100) is threaded into the roll stand, the open-loop and closed-loop control means (30) activates the positioning device (4) in such a way that the squeezing roller (3) is moved into the end position (E) and deflects the rolled strip (100) downwards into a second strip running line (B2), and
- in a third step, the rolled strip (100) is rolled in the roll stand, with cooling lubricant being applied to the rolled strip and the current speed (v) of the rolled strip (100) downstream of the roll stand being measured and supplied to the open-loop and closed-loop control means (30), the open-loop and closed-loop control means (30) activating the rotary drive (5) in such a way that the roller shell (15) rolls substantially without slipping on an upper side (101) of the rolled strip and, in the process, discharges the cooling lubricant laterally from the upper side (101).

## Revendications

1. Dispositif (1) permettant d'éliminer le lubrifiant de refroidissement lors du laminage d'une bande à laminer (100) dans une installation de laminage à froid comprenant au moins une cage de laminoir, comprenant
- un cylindre d'écrasement (3) qui peut être agencé entre des première et seconde colonnes de laminoir (21, 21') de la cage de laminoir et qui présente une enveloppe de cylindre (15) et un entraînement rotatif électrique interne (5),
- un support (2) au sein duquel le cylindre d'écrasement (3) est monté de manière rotative autour d'un axe de rotation (R),
- un dispositif de mise en place (4) permettant de mettre en place le cylindre d'écrasement (3) contre la bande à laminer (100), et
- un dispositif de commande et de réglage (30) permettant de piloter l'entraînement rotatif (5) et le dispositif de mise en place (4),
- dans lequel l'entraînement rotatif (5) est relié de manière fixe à l'enveloppe de cylindre (15), présente un stator (6) et un rotor (7) et est réalisé sous la forme d'un rotor intérieur,
- dans lequel le dispositif de commande et de réglage (30) connaît une vitesse instantanée (v) de la bande à laminer (100) derrière la cage de laminoir et le dispositif de commande et de réglage (30) est conçu pour piloter l'entraînement rotatif (5) de manière synchrone par rapport à la vitesse instantanée (v) de la bande à laminer (100) derrière la cage de laminoir,
- dans lequel le dispositif de mise en place (4) est conçu pour déplacer le support (2) avec le cylindre d'écrasement (3) entre une position initiale (A) et une position finale (E),
- dans lequel, pendant le laminage de la bande à laminer (100) dans la cage de laminoir, l'enveloppe de cylindre (15)
-- dans la position initiale (A), ne touche pas la bande à laminer (100), de sorte que la bande à laminer (100) traverse la cage de laminoir dans une première ligne de défilement de bande (B1), et
-- dans la position finale (E), vient en contact avec une face supérieure (11) de la bande à laminer (100) et dévie celle-ci vers le bas dans une seconde ligne de défilement de bande (B2), dans lequel
- le support (2) est réalisé en deux parties à partir d'une première et d'une seconde partie de support (20, 20') et le cylindre d'écrasement (3) présente un premier et un second tenon de cylindre (14, 14'),
- le premier tenon de cylindre (14) est relié de manière rigide à la première partie de support (20) et le second tenon de cylindre (14') est relié de manière rigide à la seconde partie de support (20'),
- le premier tenon de cylindre (14) est relié de manière solidaire à une enveloppe de refroidissement (13) destinée au stator (6), qui entoure le stator (6) et est reliée de manière solidaire à celui-ci, et
- le rotor (7) est relié de manière solidaire à un arbre rigide (8) qui est relié de manière solidaire à l'enveloppe de cylindre (15) par l'intermédiaire d'un arbre d'entraînement (9) flexible.

2. Dispositif (1) selon la revendication 1, dans lequel le diamètre du cylindre d'écrasement (3) est compris entre 300 et 500 mm.

3. Dispositif (1) selon l'une quelconque des revendications précédentes, dans lequel le premier tenon de cylindre (14) et l'enveloppe de refroidissement (13) présentent au moins un canal de refroidissement (16) destiné au passage d'un agent de refroidissement.

4. Dispositif (1) selon l'une quelconque des revendications précédentes, dans lequel le premier et/ou le second tenon de cylindre (14, 14') présente(nt) un passage (17) destiné à l'introduction d'un milieu gazeux sous pression à l'intérieur du cylindre d'écrasement (3).

5. Dispositif (1) selon l'une quelconque des revendications précédentes, dans lequel la première et la seconde partie de support (14, 14') s'étendent le long de l'axe de rotation (R) sur une distance comprise entre 50 et 70 mm et présentent des chanfreins (22) au niveau d'une surface de contact (23) respective par rapport au dispositif de mise en place (4).

6. Dispositif (1) selon l'une quelconque des revendications précédentes, dans lequel le dispositif de commande et de réglage (30) est conçu pour piloter une vitesse angulaire (ω) du cylindre d'écrasement (3) en se basant sur une courbe caractéristique de couple (Γ) de l'entraînement rotatif électrique (5).

7. Dispositif (1) selon l'une quelconque des revendications précédentes, dans lequel l'entraînement rotatif électrique (5) est réalisé sous la forme d'un moteur asynchrone comprenant le rotor (7) sous la forme d'un rotor à cage d'écureuil et présente un dispositif de mesure (10) permettant de détecter une vitesse angulaire instantanée (ω') du cylindre d'écrasement (3).

8. Dispositif (1) selon la revendication 7, dans lequel le dispositif de mesure (10) comprend une roue polaire (11) agencée sur le cylindre d'écrasement (3) et un capteur de rotation (12) agencé sur le support (2).

9. Dispositif (1) selon l'une quelconque des revendications 1 à 6, dans lequel l'entraînement rotatif électrique (5) est réalisé sous la forme d'un moteur synchrone.

10. Procédé d'élimination du lubrifiant de refroidissement lors du laminage d'une bande à laminer (100) dans une installation de laminage à froid comprenant au moins une cage de laminoir au niveau de laquelle est agencé un dispositif (1) selon l'une quelconque des revendications précédentes, dans lequel
- dans une première étape, avant d'enfiler une tête de bande de la bande à laminer (100) dans la cage de laminoir, le dispositif de commande et de réglage (30) pilote le dispositif de mise en place (4) de telle manière que le cylindre d'écrasement (3) est déplacé dans une position initiale (A),
- dans une seconde étape, après avoir enfilé la bande à laminer (100) dans la cage de laminoir, le dispositif de commande et de réglage (30) pilote le dispositif de mise en place (4) de telle manière que le cylindre d'écrasement (3) est déplacé dans la position finale (E) et dévie la bande à laminer (100) vers le bas dans une seconde ligne de défilement de bande (B2), et
- dans une troisième étape, la bande à laminer (100) est laminée dans la cage de laminoir, du lubrifiant de refroidissement étant appliqué sur la bande à laminer et la vitesse instantanée (v) de la bande à laminer (100) derrière la cage de laminoir étant mesurée et envoyée au dispositif de commande et de réglage (30), le dispositif de commande et de réglage (30) pilotant l'entraînement rotatif (5) de telle manière que l'enveloppe de cylindre (15) roule essentiellement sans patinage sur une face supérieure (101) de la bande à laminer et que le lubrifiant de refroidissement est dévié latéralement depuis la face supérieure (101).
